# EUROPEAN PATENT APPLICATION

(11) **EP 1 221 456 A1**
(43) Date of publication of application: **10.07.2002**
(21) Application number: 02000326.5
(22) Date of filing: 04.01.2002
(51) Int. Cl.: C08J 5/06, D06M 15/55, D06M 15/693, D06M 15/37

(54) **An adhesive comprising an epoxy compound and a resorcinol formaldehyde latex composition for coating of polyester fibres**

(30) Priority: 04.01.2001 US 754859
(71) Applicant: ARTEVA TECHNOLOGIES S.à.r.l., 8001 Zürich (CH)
(72) Inventor: Fisher, Chad Daniel, Concord, North Carolina 28027 (US)
(74) Representative: Schweitzer, Klaus, Dr.

(57) **Abstract**

A single dip adhesive coating composition having about 2 - 12 wt. % epoxy and optionally 1 - 12 wt. % isocyanate with remainder being resorcinol formaldehyde latex, on a dry wt. basis. The coating is applied to polyester cords on a wet basis and then dried. The coated polyester cords are embedded in a rubber composite and the composite is cured. The coating adheres the polyester cords to the rubber to yield good peel strength results and good visual coverage ratings.

## Description

The present invention relates to a single dip resorcinol, formaldehyde, and latex (RFL) based adhesive coating that has superior adhesive peel force and visual coverage ratings compared to industry acceptable minimums, and comparative adhesive peel force and visual coverage ratings as the best double dip and single dip systems that require high quantities of isocyanate and epoxy additives. In particular, the single dip system of the present invention achieves these equal or superior properties when employing approximately 2 - 12 wt. % epoxy, or about 2 - 12 wt. % epoxy and about 2 - 12 wt. % of an isocyanate in the dried RFL based single dip composition. The adhesive is coated on polyester cord and cured, and then embedded in rubber, which is then cured to form a composite. The composites are typically used in the tire, conveyor belt, or hose industry. The invention includes RF (resorcinol, formaldehyde) resins created in situ or by use of a precondensed RF resin.

Commercially available single dip systems used to treat polyester are comprised only of RFL. This RFL system, like the present invention, can be created in situ or by the use of precondensed RF resin. The adhesive peel force and visual coverage rating is inferior to conventional double dip systems. The typical cause of failure of RFL single dip systems is at the adhesive to rubber interface known as brown-cord failure. This failure exposes polyester that has a brown appearance with little or no rubber coverage. The RFL single dip system particularly suffers at extended cure times and high temperatures. At extended cure times and higher temperatures, the system can be as much as fifty percent weaker in adhesive peel force and substantially little or no rubber coverage leaving a poor visual coverage rating in contrast to other commonly used conventional adhesive systems.

Another conventional single dip adhesive system to treat polyester comprises RFL plus isocyanate additives. The isocyanate used in this system comprises about 8 % by wt. of the total solids of the dried coating. This type of system requires an additional chemical agent to assist in the wetting or reduction in surface tension between the polyester and the adhesive system itself. Typical failures that are observed with this type of system are brown-cord failure. This system generally provides a higher adhesive peel force compared with RFL single dip systems.

Double dip commercial adhesive systems contain two separate dips. The first dip typically comprises isocyanate, epoxy, wetting agent, and a buffer material to maintain the pH during extended treating periods. In such a system, the isocyanate comprises approximately 65 - 75 percent of the dry weight and the epoxy comprises approximately 25 - 35 percent of the total dry weight of the first dip. The second dip comprises only an RFL mixture similar to the conventional RFL single dip described above. Typically, about 1 - 2 % by dry weight based on the weight of the cord is the amount picked-up of the first dip with an additional pick-up of about 1.5- 3% from the second dip. Failures of this double dip system are divided along two different failure modes. The first failure mode is between the adhesive and the polyester surface, which leaves somewhat of a white appearance on the surface of the polyester. The isocyanate has good solubility characteristics so that it readily penetrates the PET cord providing more functional groups for binding with the epoxy. The high amount of epoxy in the double dip system adheres to the polyester creating a hard rigid shell. According to the following Japanese application No. 9-12997 the polyester - dip interface will have a tendency to crack when high heat or flexing is applied to the polyester-adhesive-rubber composite. The second type of failure is between the rubber-to-rubber interface, meaning that no cords are exposed after the peel test has been administered and that only rubber is remaining to be viewed. This means that the adhesive and the polyester were strongly bonded to the rubber, and that the rubber-to-rubber bond (cohesive failure) was weaker than the rubber-to-coated polyester bond.

The Japanese patent application (Kokai) No. 9-12997 discloses an adhesive composition containing RFL and an epoxy-cresol-novolak resin suitable for bonding polyester cords to rubber. The amount of the epoxy-cresol-novolak resin employed in the RFL is greater than fifteen percent by weight based on the amount of rubber latex plus thermal setting resin precondensate components. More specifically, this document indicates that if the amount of epoxy-cresol-novolak resin decreases below fifteen percent by weight of the dry components the composition adheres poorly to polyester cords and has diminished adhesive power. Moreover, this reference does not disclose the use of an isocyanate in the formulation. The formulation also utilizes sodium hydroxide NaOH to activate the epoxy prior to combining it with the RFL portion of the composition. Lastly, this document states that an addition of styrenebutadiene copolymer (latex) was added to the RFL mixture.

The present invention relates to a single dip, RFL based, uniform adhesive composition in which about 2 - 12 percent by weight of the adhesive composition on a dry weight basis is an epoxy, and optionally about 2 - 12 percent by weight of the adhesive composition on a dry weight basis is isocyanate. The single dip, RFL based, adhesive composition of the present invention has comparative or better peel strength than prior art single or double dip formulations, and comparative or better visual coverage rating of the amount of rubber retained on the polyester cords during the peel test. Furthermore, the lower quantities of epoxy and isocyanate in the single dip system of the present invention overcome the white and brown cord failures mentioned above. By using a single dip formulation, lower cost in raw materials and lower cost in operations (by removing the second dipping step) are achieved with the present invention.

In the broadest sense, the present invention also relates to a coated polyester cord having an adhesive dip composition thereon comprising about 2 - 12 wt. % of epoxy on a dry weight basis of the composition, and optionally about 2 - 12 wt. % of isocyanate on a dry weight basis of said dip composition, and the remainder being RFL resin. More preferably, the epoxy comprises about 3 - 8 wt. % and optionally about 3 - 8 wt. % isocyanate, on a dry weight basis of the dip composition. Most preferably, the epoxy is in a range of about 4 - 5 wt. %, or the epoxy and the isocyanate are present in a range of about 4 - 5 wt.% and 3 - 5 wt %, respectively.

In the broadest sense, the present invention also relates to a rubber composite comprising polyester cords having an adhesive dip composition thereon of about 2 - 12 wt. % of epoxy on a dry weight basis of the adhesive, and optionally about 2 - 12 wt. % of isocyanate on a dry weight basis of the composition, with the remainder being RFL, and rubber, wherein the polyester cord with the adhesive thereon is embedded in the rubber. More preferably, the epoxy comprises about 3 - 8 wt. % and optionally about 3 - 8 wt. % isocyanate, on a dry weight basis of the dip composition. Most preferably, the epoxy is in a range of about 4 - 5 wt. %, or the epoxy and the isocyanate are present in a range of about 4 - 5 wt.% and 3 - 5 wt %, respectively.

RFL from any conventionally known source useful for adhering polyester tire cord to rubber can be used with the present invention. The RFL mixture may be made in situ by adding latex, formaldehyde, and resorcinol with the epoxy, or epoxy and isocyanate, when making the adhesive of the present invention, or the RFL may be premade and then blended with the epoxy, or the epoxy and isocyanate.

The RFL may, for example, be based on: latex from Omnova Solutions, Inc.; formaldehyde from Fisher Scientific; and resorcinol from Fisher Scientific. Typical industry RFL compositions have a F/R mol ratio from about 1.2 - 2.0. The L/RF ratio, based on a dry wt. % is from about 4.5 - 5.0. With the present invention, the F/R mol ratio is the same as the industry ratio. However the L/RF ratio, based on a dry wt. % is 4.25 - 4.75, which is slightly lower than the industry standard of 4.5- 5.0.

Any latex conventionally used in the industry is suitable. Latexes of vinyl pyridine, styrene butadiene, natural rubber, butyl rubber, or a mixture of 2 or more of these is suitable in the present invention. A preferred latex is vinyl pyridine-styrene butadiene.

As conventionally used in the industry, isocyanate actually means blocked diisocyanates. The isocyanate cannot be used directly (because it reacts quickly with water) and so it is blocked. Typical diisocyanates are: 4,4'-diisocyanato diphenylenemethane (otherwise known as MDI); tolylene diisocyanate (otherwise known as TDI); and naphthylene diisocyanate (otherwise known as NDI). The isocyanate, if present in the single dip compositions of the present invention, is present in a range of about 2 - 12 wt. % on a dry weight basis of the dip. More preferably, the isocyanate is present in a range of about 3 - 8 wt. %, and most preferably, the isocyanate is present in a range of about 3 - 5 wt. %.

Any type of epoxy is also suitable for the present invention, particularly sorbitol epoxy or cresol - novolac epoxy. A suitable sorbitol epoxy is EX-614B from Nagase Chemicals Ltd. A typical cresol - novolac epoxy is ECN-1400 from CIBA. Other epoxy resins include:
(i) polyglycidyl ethers having three or more glycidyl ether groups and derived from polyol having from 3 to 15 carbon atoms, or a polyphenol having from 2 to 20 repeating units;
(ii) epoxy novolac resin having the structure 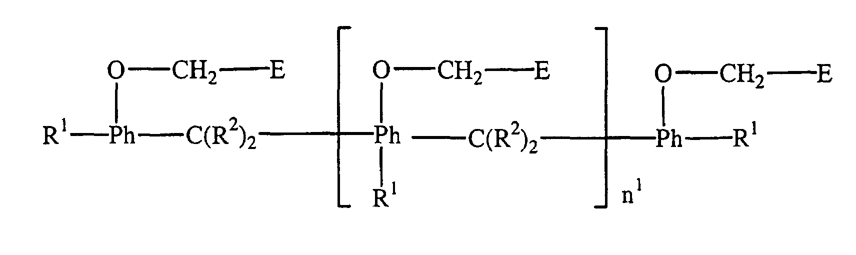 where
   Ph represents a phenyl ring, and
   E represents the epoxide ring 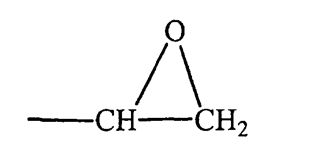
   R¹ is a substituent on the phenyl ring, and represents hydrogen, halogen, alkyl or aryl, preferably C₁ - C₄ alkyl;
   R² represents hydrogen, alkyl, aryl, or an aryl group substituted by glycidyl ether; and
   n¹ has a value not less than 0, typically in the range from 0.1 to 5;
(iii) a polyfunctional alkylene epoxide having the structure 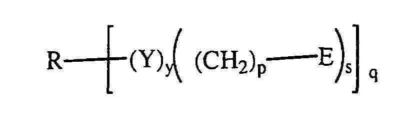 wherein
   R is an aromatic, aliphatic, aralkyl radical that may have a substituent;
   E represents an epoxide ring;
   Y is a heteroatom selected from oxygen (O), nitrogen (N) and sulfur (S);
   y represents zero or 1;
   p represents an integer in the range from 1 to 6;
   q represents an integer in the range from 2 to 12; and
   s represents 1 or 2;
(iv) diglycidyl ethers having the structure

   E―CH₂―O―Rₐ―O―CH₂―E

   wherein Rₐ represents alkylene or arylene; and,
   E represents an epoxide; and
(v) a bisphenol-A based resin having a structure 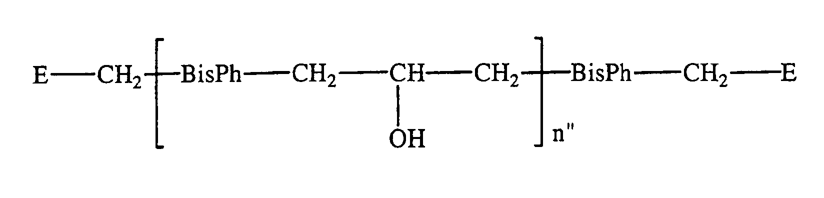 where
   BisPh represents O - Ph - C(Me)₂ - Ph - O,
   E represents an epoxide ring
   Me represents a methyl group, and
   n² has a value in the range from about 0.1 to about 5.

From the foregoing it will now be evident that useful epoxy resins are selected from those represented by the structures

R⁅Y―(CH₂)ₚ―E]_{q}

and, 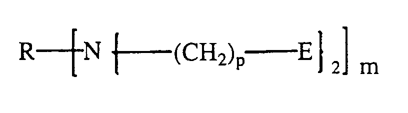 wherein
R is an aromatic, aliphatic or aralkyl radical that may have a substituent;
E represents an epoxide ring;
Y is a heteroatom selected from O and S;
m represents an integer in the range from 1 to about 4, preferably 2 to 4;
p represents an integer in the range from 1 to about 6, preferably 1 to 3;
q represents an integer in the range from 2 to about 12.

Commercially available glycidyl epoxy resins are most preferred, which in general, are mixtures of high and low-molecular weight resins, the distribution of the molecular weights varying with the conditions of synthesis, most preferred being resins having a molecular weight in the range from about 300 to 5000. Useful polyepoxides are tetraglycidyl ether of glyoxal phenol novolac such as XB 4399-3; and Tactix 7 tris(hydroxyphenyl) methane based epoxies; Araldite 7 epoxy cresol novolacs ECNs 9511, 1273, 1280, 1299, 1400; Araldite 7 epoxy phenol novolacs EPNs 1179, 1180, 9880, PY 307-1; Araldite 7 epoxies MYs 0500, 0510; 721, 9655, 720, 9612, 9512, 9634, 9663; polybutadiene polyepoxides; and many other reactive epoxy resins having no other reactive groups other than 1,2-epoxide groups, all the foregoing being available from Ciba. Other useful epoxides are polyglycidyl ethers of polyols such as glycerol polyglycidyl ether, sorbitol polyglycidyl ether, polyglycerol polyglycidyl ether, and the like, all available from Nagase. Most preferred are cresol - novolac epoxy and sorbitol epoxy resins, having an epoxy functionality in the range from 3 to about 10.

The epoxy is present in the single dip compositions of the present invention in a range of about 2- 12 wt. % on a dry weight basis of the dip. More preferably, the epoxy is present in a range of about 3 - 8 wt. %, and most preferably, the epoxy is present in a range of about 4 - 5 wt. %.

Standard rubber stocks in the tire industry may be employed. Rubber stocks having different modulus properties give different results, however, even lower modulus rubber stock can enjoy the benefits of the improved adhesion of the present invention. These stocks are typically unvulcanized rubber in which the cord is embedded therein and cured at known conditions.

The polyester yarn of the present invention may be any source of industrial polyester yarn such as activated or unactivated yarn having a denier between about 1000 to 2200, which are typical in the industry. A 1000 denier yarn is typically twisted in an 11.5 x 11.5 turns per inch (∼4.5 x 4.5 turns per cm) in a two-ply construction. The resulting twisted cord is ready for coating with the adhesive coatings described above.

Typical dip pick-up is 2 -7 wt. % based on the wt. of the cord. The optimal range is 3.5 - 5 wt. %. Although the single dip coating of the present invention enjoys a range from 2 - 12 wt. % epoxy, the preferred range is from about 3 - 8 wt. % epoxy, and a most preferred range is 4 - 5 wt. % epoxy on a dry wt. basis with the remainder being RFL. When isocyanate is incorporated into the dip of the present invention, using about 1 - 12 wt. % on a dry weight basis, then the amount of RFL is reduced by this same amount, such that the epoxy, isocyanate and RFL make up 100 wt. %. When epoxy and isocyanate are employed, the most preferred range is about 4 - 5 wt. % and 3 - 5 wt. %, on a dry weight basis, respectively, with the remainder being RFL. On a treated cord, the preferred dried amount of single dip coating is from 3.5 - 5 wt. % based on the weight of the cord and the dried dip itself contains, for the most preferred basis, 4- 5 wt. % epoxy, or 4 - 5 wt. % epoxy and 3 - 5 wt. % isocyanate.

The conditions for optimizing the bond between the single dip of the present invention and polyester cord depend on the temperature and time for dipping and curing the polyester cord, as well as the rubber stock employed. Good results can best be achieved when the polyester cord is dipped into the single dip system of the present invention under proper treating conditions, namely:

| Zone | Exposure Time (in sec) | Temperature (degrees F) |
|---|---|---|
| Drying Zone (drying dip) | 80-120 | 320-380 (160-193 °C) |
| Curing Zone (curing RFL) | 40-70 | 455-485 (235-252 °C) |
| Normalizing Zone | 40-70 | 455-485 (235-252 °C) |

In the Drying, Curing and Normalizing Zones, the dipped polyester is under various degrees of light tension to achieve the desired shrinkage and modulus for the dipped and cured (treated) cord. Generally the amount of tension ranges from about 0.1 - 1 gram per denier.

### EXPERIMENTAL PROCEDURE

The Control 1 to compare against Experiment I is a typical double dip system. The first dip composition comprises about 27 weight percent of a glycerol epoxy (Ner-010 by Nagase), and about 73 weight percent blocked isocyanate (Grilbond IL-6 by EMS Primid G.), on a dry wt. basis. The second dip composition is RFL resin. The RF resin is 17.1 weight percent and the latex is 78.9 weight percent, on a dry wt. basis. The uncured rubber was an industry available rubber labeled Rubber Stock 1. The 1000 denier polyester yarn was an adhesive activated Type 793 from KoSa. The yarn was plied into a two-ply cord having 11.5 x 11.5 turns per inch (∼4.5 x 4.5 turns per cm). The polyester cord picks up about 1 - 2 wt. % of the first dip and 1.5 - 3 wt. % of the second dip. The total dip pick-up is typically about 3.5 - 4 % by wt., based on the weight of the cord. The cords were embedded in the unvulcanized Rubber Stock 1 and for Experiment I the rubber composites were cured at 338° F (170 °C), for 10 minutes at 50 psi (-345 kPa) as recommended by the tire manufacturer. The peel force was then measured at room temperature and at 106° C (after conditioning the samples for 30 minutes). For this control, the room temperature peel force was 267.6 N (newtons) and for the elevated temperature test (106° C) the peel force value was 199.6 N. The visual coverage ratings at room temperature and at 106° C were 5.0 and 4.0 respectively. The minimum industry acceptable adhesion levels for Rubber 1, at 106 °C are 120 N and 3.5 visual coverage. There is no industry acceptable adhesion level at room temperature.

The Control 2 to compare against Experiment II is also a double dip system. The first dip and second dip compositions were the same as in Experiment I. The polyester yarn, woven into cord, was the same as employed in Experiment I. The cords were embedded in the unvulcanized, uncured industry available Rubber Stock 2. For Experiment II, the Rubber Stock composites were cured for 20 minutes and 60 minutes at 320° F at 50 psi (∼160°C at 345 kPa). The resulting peel force and visual coverage rating were then tested at room temperature. The 20 min. cured composite had a peel force of 420 N (newtons) and the 60 min. cured composite has a peel force of 344.7 N. The visual coverage ratings were 5.0 for both composites. Minimum industry acceptable adhesion levels for Rubber Stock 2, after curing for 20 min. at 320 °F (∼ 160 °C) are 178 N and 3.5 visual coverage. There is no industry acceptable adhesion level for the 60 min. cured composite.

The following components were used to produce the single dip adhesive of the present invention.

| Component | Amount |
|---|---|
| Water (epoxy only) | 375 parts |
| Water (epoxy and isocyanate) | 350 parts |
| Latex (41% solid) styrene-butadiene-vinylpiridine | 190 parts |
| Sodium Hydroxide (50 weight %) | 1.96 parts |
| Formaldehyde (37 weight %) | 12.5 parts |
| Resorcinol | 13.5 parts |
| Isocyanate (optionally) | variable |
| Epoxy | variable |

For both the epoxy or the epoxy and isocyanate single dip formulations of the present invention, the first step calls for mixing 150 parts water with the sodium hydroxide for 10 minutes, then adding the resorcinol and mixing for another 15 min. or until dissolved, followed by adding the formaldehyde and mixing for 15 min. The temperature should be monitored and be within the range of 25 - 45°C.

The second step varies depending on the dip formulation being epoxy or epoxy and isocyanate. For the epoxy only system, 150 parts of water is mixed with the latex for 30 min. For the epoxy and isocyanate system, 125 parts of water is mixed with the latex for 30 min. The second step can be mixed at the same time as the first step.

The third step for both systems calls for 75 parts water to be mixed with the epoxy for 10 min. and if isocyanate is employed, it is then added and mixed for an additional 10 min. Then the mixture is mixed for an additional 10 min. (a total of 20 min. for the epoxy system, and 30 min. for the epoxy and isocyanate system).

The final step calls for adding step one to step two and mixing for 30 min., then aging for 24 hours. Then add step 3 to the aged combination of step one and two for 30 min. prior to dipping and continue to mix while treating. With the single dip compositions of the present invention, the wet and dried dip remains uniformly mixed and the dip components are uniformly distributed on the cord.

These components were combined in different combinations to create four single dip adhesive coatings with the first combination consisting of a sorbitol epoxy with isocyanate, the second combination containing sorbitol epoxy and no isocyanate, the third combination being a cresol - novolac epoxy with isocyanate, and the fourth combination being just cresol - novolac epoxy.

The yarns employed were an adhesive activated yarn sold under the trade name Type 793 and a Type 792 non-adhesive activated yarn, both of 1000 denier from KoSa. The yarns were twisted in a two-ply 11.5 x 11.5 turns per inch (∼4.5 x 4.5 turns per cm) construction. The resulting twisted cord was coated with the adhesive coatings described above. The time, tension, and temperatures for the Drying, Curing and Normalizing zones for the Controls 1 and 2 and for Experiments I and II were: for Drying, about 350° F (∼ 177 °C) for 90 seconds, at a tension of 325 grams; for Curing, about 475°F (∼ 246 °C) for 50 seconds at a tension of 650 grams; and for Normalizing, about 475°F (~246 °C) for 50 seconds at a tension of 200 grams.

The 2 different rubber stocks employed in the Experiments are utilized commercially by two tire companies. Rubber Stock 1 has a lower modulus than Rubber Stock 2 and therefore it is easier to achieve high visual ratings with Rubber Stock 2. On the other hand, Rubber Stock 2 achieved higher peel force strength compared with Rubber Stock 1.

The cords were embedded in the unvulcanized Rubber Stocks and for Experiment I the rubber composites were cured at 338 ° F (∼ 170 °C), for 10 minutes, at 50 psi. (∼ 345 kPa) as recommended by the tire manufacturer. The peel force was then measured at room temperature and at 106° C (after conditioning the samples for 30 minutes). For Experiment II, the rubber composites were cured for 20 minutes and 60 minutes at 320 ° F (∼ 160 °C) at 50 psi (∼ 345 kPa). The resulting peel force and visual coverage rating were then tested at room temperature.

### Adhesion testing:

The adhesion test samples were fabricated into one inch (∼ 2.54 cm) by three-inch (~ 7.6 cm) peel adhesion strips according to ASTM D-4393-98. The samples were built so that the cords were side by side and touching each other, but not counted. The average force required to pull the sample apart at a specified temperature was recorded and averaged, and the amount of rubber coverage remaining on the cords was estimated visually and rated. Cohesive failure is between the rubber-to-rubber interface and means that the bond between the PET cord-dip-rubber was weaker. The visual rating of the peeled area was determined by visually judging the least rubber covered fabric face and applying the following rating scale to the nearest 10%:

| Rating | Rubber Coverage % |
|---|---|
| 0 | 0 |
| 0.5 | 10 |
| 1.0 | 20 |
| 1.5 | 30 |
| 2.0 | 40 |
| 2.5 | 50 |
| 3.0 | 60 |
| 3.5 | 70 |
| 4.0 | 80 |
| 4.5 | 90 |
| 5.0 | 100 |

Less than 3.5 is unacceptable. Preferably a rating of 4 or higher is achieved, and most preferably a rating of 4.5 - 5 is achieved with the present invention.

### Experiment I

In this Experiment, Rubber Stock 1 was utilized with Type 793 polyester yarn from Kosa, which is adhesive activated 1000 denier yarn. The variable amount of epoxy, or epoxy and isocyanate employed is shown in Table 1. The blocked isocyanate employed is commercially available under the name Grilbond IL-6, from Ems-Primid Company. It is a caprolactam block isocyanate. The peel force measurement was conducted at room temperature (24° C) and at high temperature (106° C) to evaluate the effects of extended environmental conditions. The visual coverage rating was also observed. The results are shown in Table 1.

**TABLE 1**

| **Summary of Epoxy/Isocyanate loading by weight % for Rubber 1** | | | | | | | |
|---|---|---|---|---|---|---|---|
| **Adhesive** | **Concentration are in wt. %** | | | **room temp** | **room temp** | **106 °C** | **106 °C** |
| | **Epoxy EX614B** | **ECN1400** | **Isocyanate IL-6** | **Peel force value (N)** | **coverage rating** | **Peel force value (N)** | **coverage rating** |
| E4 | 4.5 | | 6.8 | 240.7 | 5.0 | 188.4 | 4.5 |
| E34 | 4.6 | | 4.6 | 264.5 | 5.0 | 206.8 | 4.8 |
| E2 | 4.7 | | 2.3 | 241.3 | 5.0 | 186.4 | 4.5 |
| E5 | 8.1 | | 12.3 | 227.9 | 5.0 | 185.5 | 4.7 |
| E36 | 8.9 | | 4.4 | 253.3 | 5.0 | 169.6 | 3.8 |
| E35 | 9.1 | | 2.3 | 249.8 | 5.0 | 182.1 | 5.0 |
| E1 | 12.5 | | 6.2 | 244.9 | 5.0 | 158.4 | 5.0 |
| E6 | 13 | | 2.1 | 234.8 | 5.0 | 181.6 | 4.8 |
| E3 | 18.5 | | 9.2 | 69.8 | 0.0 | 53.8 | 0.0 |
| E7 | 19.6 | | 3.9 | 198.3 | 4.0 | 145.3 | 3.5 |
| E11 | 32.3 | | 4.8 | 147.4 | 1.0 | 105.6 | 1.5 |
| E38 | 4.4 | | | 246.0 | 5.0 | 194.3 | 5.0 |
| E8 | 4.9 | | | 237.7 | 5.0 | 185.1 | 5.0 |
| E40 | 8.3 | | | 259.6 | 5.0 | 179.5 | 4.0 |
| E37 | 9.3 | | | 246.9 | 5.0 | 176.9 | 4.0 |
| E39 | 12.06 | | | 239.4 | 5.0 | 162.2 | 3.8 |
| E9 | 13.3 | | | 236.4 | 4.8 | 187.9 | 4.8 |
| E10 | 20.5 | | | 213.7 | 3.8 | 148.0 | 2.5 |
| E15 | | 1.87 | 7 | 224.6 | 5.0 | 167.8 | 3.7 |
| E41 | | 1.9 | 4.8 | 238.5 | 5.0 | 198.7 | 5.0 |
| E13 | | 1.97 | 2.4 | 238.2 | 5.0 | 182.3 | 5.0 |
| E16 | | 3.4 | 12.9 | 214.6 | 4.5 | 141.7 | 2.5 |
| E42 | | 3.8 | 2.4 | 252.2 | 5.0 | 203.2 | 5.0 |
| E43 | | 3.8 | 4.7 | 263.9 | 5.0 | 217.3 | 5.0 |
| E12 | | 5.4 | 6.7 | 230.2 | 5.0 | 178.4 | 5.0 |
| E17 | | 5.7 | 2.3 | 233.3 | 5.0 | 186.7 | 4.9 |
| E14 | | 8.4 | 10.5 | 220.2 | 4.8 | 140.9 | 3.0 |
| E18 | | 8.9 | 4.4 | 231.7 | 5.0 | 174.7 | 4.8 |
| E22 | | 16 | 6 | 179.4 | 5.0 | 106.3 | 2.5 |
| E19 | | 2 | | 233.4 | 5.0 | 178.0 | 4.8 |
| E44 | | 3.9 | | 252.1 | 5.0 | 196.0 | 5.0 |
| E20 | | 5.8 | | 224.9 | 5.0 | 179.4 | 4.8 |
| E21 | | 9.35 | | 231.3 | 5.0 | 177.6 | 4.8 |

When the epoxy is employed in a range of from about 2 - 12 wt. %, then good peel force values both at room temperature and at an elevated temperature of 106° C and good visual coverage ratings are obtained. The best results, however, are obtained when the epoxy is in a range of about 4 - 5 wt. %. When the epoxy/isocyanate combination (MDI) is used the best result is obtained when the epoxy is in the range of 4 - 5 wt. % and the isocyanate is in the range of 3 - 5 wt.% on a dried dip weight basis.

The table also illustrates that whether the epoxy is sorbitol epoxy or cresol-novolac epoxy, the results are about the same.

### Experiment II

In Experiment II, Rubber Stock 2 was employed along with the same yarn as in Experiment I. The amounts of epoxy and isocyanate were also the same as in Experiment I. The absolute value obtained for the peel force is different than that set forth in Experiment I because of the different modulus of the rubber. Some of the rubber composites were cured at 320 °F (∼ 160 °C) for 20 minutes, and others were cured at 320° F (∼ 160 °C) for 60 minutes. The peel force and visual coverage rating were determined at room temperature. The results are set forth in Table 2.

**TABLE 2**

| **Summary of Epoxy/Isocyanate loading by weight % for Rubber 2** | | | | | | | |
|---|---|---|---|---|---|---|---|
| **Adhesive** | **Concentration are in wt. %** | | | **20min. @320°F** | **20min.@320°F** | **60min.@320°F** | **60min.@320°F** |
| | | | | **(∼ 160 °C)** | **(∼ 160 °C)** | **(∼ 160 °C)** | **(∼ 160 °C)** |
| | **Epoxy EX614B** | **Epoxy ECN1400** | **Isocyanate IL-6** | **Peel force value (N)** | **coverage rating** | **Peel value (N)** | **Coverage Rating** |
| E4 | 4.5 | | 6.8 | 375.4 | 4.8 | 350.8 | 4.9 |
| E34 | 4.6 | | 4.6 | 383.7 | 5.0 | 325.8 | 5.0 |
| E2 | 4.7 | | 2.3 | 364.3 | 4.6 | 322.1 | 4.3 |
| E5 | 8.1 | | 12.3 | 332.9 | 4.0 | 271.4 | 3.0 |
| E36 | 8.9 | | 4.4 | 345.8 | 3.8 | 271.5 | 4.2 |
| E35 | 9.1 | | 2.3 | 297.5 | 3.5 | 296.6 | 3.7 |
| E1 | 12.5 | | 6.2 | 280.4 | 4.0 | 287.9 | 4.8 |
| E6 | 13 | | 2.1 | 384.3 | 4.5 | 336.3 | 4.0 |
| E3 | 18.5 | | 9.2 | 53.7 | 0.0 | 61.6 | 0.0 |
| E7 | 19.6 | | 3.9 | 135.1 | 0.0 | 176.3 | 0.5 |
| E11 | 32.3 | | 4.8 | 80.9 | 1.0 | 108.5 | 0.0 |
| E38 | 4.4 | | | 395.1 | 4.5 | 278.3 | 3.7 |
| E8 | 4.9 | | | 369.1 | 4.5 | 311.1 | 4.7 |
| E40 | 8.3 | | | 387.0 | 3.9 | 309.0 | 4.2 |
| E37 | 9.3 | | | 338.9 | 3.9 | 277.2 | 3.5 |
| E39 | 12.06 | | | 290.9 | 3.3 | 255.9 | 3.2 |
| E9 | 13.3 | | | 348.1 | 4.1 | 312.1 | 3.9 |
| E10 | 20.5 | | | 202.0 | 1.5 | 202.4 | 0.5 |
| E15 | | 1.87 | 7 | 411.9 | 5.0 | 334.0 | 5.0 |
| E41 | | 1.9 | 4.8 | 436.4 | 5.0 | 327.0 | 5.0 |
| E13 | | 1.97 | 2.4 | 406.8 | 5.0 | 326.3 | 5.0 |
| E16 | | 3.4 | 12.9 | 339.9 | 5.0 | 339.0 | 4.8 |
| E42 | | 3.8 | 2.4 | 392.0 | 5.0 | 346.4 | 4.6 |
| E43 | | 3.8 | 4.7 | 405.8 | 5.0 | 340.2 | 5.0 |
| E12 | | 5.4 | 6.7 | 412.9 | 5.0 | 309.8 | 5.0 |
| E17 | | 5.7 | 2.3 | 427.6 | 5.0 | 351.2 | 5.0 |
| E14 | | 8.4 | 10.5 | 404.7 | 5.0 | 343.4 | 4.8 |
| E18 | | 8.9 | 4.4 | 396.0 | 5.0 | 382.7 | 5.0 |
| E22 | | 16 | 6 | 415.4 | 5.0 | 339.0 | 4.0 |
| E19 | | 2 | | 403.9 | 5.0 | 314.0 | 5.0 |
| E44 | | 3.9 | | 392.0 | 4.8 | 289.0 | 3.5 |
| E20 | | 5.8 | | 393.7 | 5.0 | 355.5 | 5.0 |
| E21 | | 9.35 | | 365.4 | 4.0 | 355.5 | 4.5 |

The results in Experiment I are also demonstrated in Experiment II, namely, when the epoxy is employed in a range of from about 2- 12 wt. %, then good peel force values, both at the 20 min. cure and the 60 min. cure, and good visual coverage ratings are obtained. The best results, however, are obtained when the epoxy is in a range of about 4 - 5 wt. %. When the epoxy/isocyanate combination (MDI) is used the best result is obtained when the epoxy is in the range of 4 - 5 wt.% and the isocyanate is in the range of 3 - 5 wt.% on a dried dip weight basis.

The table also illustrates that whether the epoxy is sorbitol epoxy or cresol-novolac epoxy, the results are about the same.

### Experiment III

A Type 792 (non-adhesive activated) and a Type 793 (adhesive activated) 1300 denier yarn produced by Kosa was employed in this Experiment with both the epoxy single dip system and the epoxy and isocyanate single dip system, and with both Rubber Stock 1 and 2. An adhesive activated yarn is a coated polyester yarn having an epoxy coating to increase the adhesion between the rubber and the polyester. The adhesive compositions were the same as referred to in Experiments I and II. The peel force was tested and the results are set forth in Table 3 below.

**TABLE 3**

| Peel Force (N) | | | | |
|---|---|---|---|---|
| Test Protocol | Measured at 106 °C | Measured at 106 ° C | Cured for 20 min. @ 320 °F (∼ 160 °C) | Cured for 20 min. @ 320 °F (∼ 160 °C) |
| Rubber | 1 | 1 | 2 | 2 |
| Yarn Type | 793 | 792 | 793 | 792 |
| Adhesive composition E34 | 212 | 160 | 345.0 | 327.0 |
| E42 | 209 | 227 | 353.0 | 330.0 |
| E44 | 182 | 220 | 352.0 | 333.0 |

Each rubber stock provides its own unique results when adhesive activated cord vs. non-adhesive activated cord is used. Although the values for the non-adhesive activated yarn were mostly lower than for activated yarn, the peel force for all yarns was well above the minimum required by the tire manufacturers.

## Claims

1. A single dip adhesive composition comprising: from 2 - 12 wt. % epoxy, and resorcinol formaldehyde latex, based on a dry weight basis.

2. The composition of claim 1, wherein said resorcinol formaldehyde latex has a formaldehyde to resorcinol mol ratio of from 1.2 to 2.

3. The composition of claim 2, wherein said resorcinol formaldehyde latex has a latex to resorcinol-formaldehyde ratio of 4.25 - 4.75 wt. % based on a dry weight basis.

4. The composition of one of claims 1 to 3, wherein said epoxy is a cresol-novolac epoxy.

5. The composition of one of claims 1 to 3, wherein said epoxy is a sorbitol epoxy.

6. The composition of one of claims 1 to 5, wherein said epoxy is in a range of 3 - 8 wt. % on a dry weight basis.

7. The composition of one of claims 1 to 5, wherein said epoxy is in a range of 4 - 5 wt. % on a dry weight basis.

8. The composition of one of claims 1 to 7, further comprising from 2 - 12 wt. % isocyanate, based on a dry weight basis.

9. The composition of claim 8, wherein said isocyanate is in a range of 3 - 8 wt. % on a dry weight basis.

10. The composition of claim 8, wherein said isocyanate is in a range of 3 - 5 wt. % on a dry weight basis.

11. An adhesive coated polyester cord comprising: a polyester cord coated with a single dip adhesive composition according to one of claims 1 to 10.

12. The coated polyester cord of claim 11, wherein said single coating is present on said cord in a range of 2 - 7 wt. % based on the weight of said cord.

13. A rubber composite comprising a cured rubber and an adhesive coated polyester cord according to claims 11 or 12.
